# EUROPÄISCHE PATENTANMELDUNG

(11) **EP 1 495 664 A1**
(43) Veröffentlichungstag der Anmeldung: **12.01.2005**
(21) Anmeldenummer: 04103176.6
(22) Anmeldetag: 05.07.2004
(51) Int. Cl.: A01D 43/08

(54) **Maschine zum Mähen von stängelartigem Erntegut**

(30) Priorität: 08.07.2003 DE 10330669
(71) Anmelder: Maschinenfabrik Kemper GmbH & Co. KG, 48973 Stadtlohn (DE)
(72) Erfinder: Brüning, Ulrich, 48653, Coesfeld (DE); Weitenberger, Klemens, 46325, Borken (DE); Hüning, Martin, 48727, Billerbeck (DE); Schulze Hockenbeck, Leo, 48351, Everswinkel (DE)
(74) Vertreter: Holst, Sönke, Dr.

(57) **Zusammenfassung**

Die Erfindung bezieht sich auf eine Maschine (10) zum Mähen von stängelartigem Erntegut, mit mehreren seitlich nebeneinander angeordneten Einzugs- und Mäheinrichtungen (12, 14) zum Abschneiden und Fördern des Ernteguts, von denen auf einer Seite der Längsmittelebene der Maschine (10) eine erste Einzugs- und Mäheinrichtung (12) und eine zweite, seitlich neben ihr angeordnete Einzugs- und Mäheinrichtung (14) vorhanden sind, und mit einer Umlenkfördereinheit (26), die eine leicht nach vorn geneigte Drehachse aufweist, um den vertikalen Abstand zwischen der Arbeitsebene der Einzugs- und Mäheinrichtungen (12, 14) und der Ebene des Einzugskanals (28) einer Erntemaschine zu überbrücken und das Erntegut in den Einzugskanal (28) einer Erntemaschine einzuführen.

Es wird vorgeschlagen, dass die erste Einzugs- und Mäheinrichtung (12) derart antreibbar ist, dass sie abgeschnittenes Erntegut zunächst nach innen und dann nach hinten fördert, und dass sich die zweite Einzugs- und Mäheinrichtung (14) dazu gleichsinnig dreht.

## Beschreibung

Die Erfindung betrifft eine Maschine zum Mähen von stängelartigem Erntegut, mit mehreren seitlich nebeneinander angeordneten Einzugs- und Mäheinrichtungen zum Abschneiden und Fördern des Ernteguts, von denen auf einer Seite der Längsmittelebene der Maschine eine erste Einzugs- und Mäheinrichtung und eine zweite, seitlich neben ihr angeordnete und weiter als die erste Einzugs- und Mäheinrichtung von der Längsmittelebene der Maschine beabstandete Einzugs- und Mäheinrichtung vorhanden sind, und mit einer Umlenkfördereinheit, die eine leicht nach vorn geneigte Drehachse aufweist, um den vertikalen Abstand zwischen der Arbeitsebene der Einzugs- und Mäheinrichtungen und der Ebene des Einzugskanals einer Erntemaschine zu überbrücken und das Erntegut in den Einzugskanal einer Erntemaschine einzuführen, wobei die erste Einzugs- und Mäheinrichtung derart antreibbar ist, dass sie abgeschnittenes Erntegut zunächst nach innen und dann nach hinten fördert.

In der DE 39 09 754 A ist ein Erntegerät zum Einbringen von Halmfutter beschrieben, bei dem vier rotierende Schneidscheiben seitlich nebeneinander angeordnet sind. Das abgeschnittene Gut wird an ihrer Rückseite von einer Querförderschnecke übernommen. Auf den beiden Seiten der Längsmittelebene drehen sich die Schneidscheiben jeweils gleichsinnig, wobei das Gut zuerst nach außen und dann nach hinten gefördert wird. Die WO 02/062128 A zeigt eine Maschine mit derselben generellen Konfiguration.

Die DE 199 53 521 A zeigt eine Schneid- und Fördervorrichtung für stängeliges Halmgut, die vier seitlich nebeneinander angeordnete Schneid- und Förderrotoren aufweist. Der Drehsinn der Schneid- und Förderrotoren ist so, dass das Gut zuerst nach innen und dann nach hinten gefördert wird. An der Rückseite der Schneid- und Förderrotoren ist eine Querförderschnecke angeordnet, die das Erntegut von den äußeren Schneid- und Förderrotoren zur Mitte der Maschine fördert, wo es durch den mittleren Bereich der Querförderschnecke gemeinsam mit dem von den inneren Schneid- und Förderrotoren einlaufenden Gut nach hinten in den Feldhäcksler gefördert wird.

In der EP 0 508 189 A wird eine Maschine zum Mähen von Mais beschrieben, bei der beidseits der Längsmittelebene je zwei Einzugs- und Mähtrommeln angeordnet sind. Die inneren Einzugsund Mähtrommeln drehen sich derart, dass das Gut zunächst nach außen und dann nach hinten gefördert wird. Die äußeren Einzugsund Mähtrommeln drehen sich dazu gegensinnig.

In der EP 0 760 200 A ist eine Maschine zum Mähen von stängelartigem Erntegut offenbart, bei der mehrere Einzugs- und Mähtrommeln über die Arbeitsbreite verteilt sind. Das Gut wird an der Rückseite der Einzugs- und Mähtrommeln entlang der Rückwand nach innen transportiert. Auf den beiden Seiten der Längsmittelebene drehen sich die Einzugs- und Mähtrommeln mit Ausnahme der äußeren Einzugs- und Mähtrommeln jeweils gleichsinnig, so dass das Gut zuerst nach außen und dann nach hinten gefördert wird. Diese Drehrichtung ermöglicht die Verwendung von Querfördertrommeln im Zwickelbereich benachbarter Einzugs- und Mähtrommeln. Den inneren Einzugs- und Mähtrommeln wird das Gut von den weiter außen angeordneten Einzugs- und Mähtrommeln durch Querfördertrommeln zugeführt. Sie übergeben dieses Gut, dem das von ihnen geerntete Gut hinzugefügt wird, den Schrägfördertrommeln, welche es nach oben und hinten in den Einzugskanal des Feldhäckslers fördern.

Die Einzugs- und Mähtrommeln in der EP 1 008 291 A drehen sich mit demselben Drehsinn wie die in der EP 0 760 200 A. Die Querförderung wird jedoch hinter den Einzugs- und Mähtrommeln durch einen separaten, von den Einzugs- und Mähtrommeln getrennten Querförderer bewerkstelligt.

In den Figuren 10 und 11 der GB 2 012 154 A wird eine Maiserntemaschine gezeigt, bei der beidseits der Längsmittelebene jeweils zwei Aufnahmetrommeln angeordnet sind. Die äußeren Aufnahmetrommeln drehen sich nach außen, die inneren Aufnahmetrommeln nach innen. An ihrer Rückseite wird das Erntegut durch einen Gurtförderer bzw. einen Schneckenförderer nach innen zur Mitte der Maschine gefördert und dann nach hinten in den Einzugskanal eines Häckslers umgelenkt.

Die DE 102 22 310 A offenbart eine Maschine zum Ernten vom Mais, bei der die inneren Einzugs- und Mähtrommeln nach innen drehen. Sie führen das Gut Umlenkfördereinheiten in Form von Schrägfördertrommeln zu, die das Gut nach oben und hinten in den Einzugskanal der Erntemaschine fördern. Das Gut von den nach außen drehenden, äußeren Einzugs- und Mähtrommeln wird, da eine Förderung durch die Rückseiten der inneren Einzugs- und Mähtrommeln wegen der gewählten Drehrichtung nicht möglich ist, hinter letzteren durch einen separaten Querförderer den Schrägfördertrommeln zugeführt. Der Querförderer kann sich vor oder hinter dem Querförderkanal befinden.

Die in der EP 0 760 200 A offenbarte Maschine hat dadurch, dass die Querfördertrommeln mit den Einzugs- und Mähtrommeln zusammenwirken, den Vorteil einer kurzen Bauweise, sodass der sie tragende Feldhäcksler nur ein relativ geringes Drehmoment aufnehmen muss. Eine kurze Bauweise hat auch die in der DE 102 22 310 A vorgeschlagene Maschine. Allerdings drehen sich einige Mähtrommeln bei diesen Maschinen gegensinnig, so dass sich im Einlaufbereich zwischen diesen Mähtrommeln Einlaufprobleme ergeben können. Die Maschinen gemäß DE 39 09 754 A, DE 199 53 521 A, WO 02/062128 A, EP 1 008 291 A und GB 2 012 154 A sind wegen der unabhängig von den Einzugs- und Mähtrommeln wirkenden Querförderer in Form von Schnecken- oder Bandförderern in Fahrtrichtung wesentlich länger und belasten den Feldhäcksler stärker. Die Bauform gemäß EP 0 508 189 A ist für Arbeitsbreiten, wie sie mit den zuvor genannten Maschinen erzielt werden, nur eingeschränkt geeignet.

Die der Erfindung zu Grunde liegende Aufgabe wird darin gesehen, eine kompakte Maschine zum Mähen von stängelartigem Erntegut zu schaffen, bei der die oben erwähnten Nachteile nicht oder nur in geringerem Maße vorliegen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf eine Maschine zum Mähen von stängelartigem Erntegut, bei der bezüglich der Fahrtrichtung seitlich einer Längsmittelebene wenigstens eine erste Einzugsund Mäheinrichtung und eine nach außen folgende, gegenüber der inneren Einzugs- und Mäheinrichtung nach außen versetzte zweite Einzugs- und Mäheinrichtung nebeneinander angeordnet sind. Hinter den Einzugs- und Mäheinrichtungen ist in der Mitte der Maschine eine Umlenkfördereinheit angeordnet, die zur Überwindung des Höhenunterschieds zwischen der Arbeitsebene der Einzugs- und Mäheinrichtungen und der Ebene des Einzugskanals einer die Maschine tragenden selbstfahrenden Erntemaschine eine etwa vertikale, jedoch leicht nach vorn geneigte Drehachse aufweist. Die Umlenkfördereinheit ist vorzugsweise eine Schrägfördertrommel, die insbesondere mit übereinander angeordneten Förderscheiben versehen ist, über deren Umfang Mitnehmer verteilt sind. Denkbar wäre aber auch eine Verwendung eines mit Zugmitteln (Ketten oder Riemen) ausgestatteten Förderers als Umlenkfördereinheit. Diese Umlenkfördereinheit hat gegenüber den im Stand der Technik häufig verwendeten Schneckenförderern den Vorteil, dass sie kleiner und leichter ist. Die erste Einzugsund Mäheinrichtung dreht sich im Erntebetrieb zunächst nach innen und dann nach hinten. Dadurch ziehen zwei in der Mitte (beidseits der Längsmittelebene) einer Maschine symmetrisch angeordnete erste Einzugs- und Mäheinrichtungen das Erntegut zwischen sich ein, was insbesondere dann vorteilhaft ist, wenn im Bereich zwischen ihnen Pflanzenstängel einlaufen. Die zweite Einzugs- und Mäheinrichtung dreht sich derart, dass sie das Gut zunächst nach innen und dann nach hinten fördert, d. h. gleichsinnig mit der ersten Einzugs- und Mäheinrichtung. Ein Vorteil liegt darin, dass die Drehrichtung aller Einzugs- und Mäheinrichtungen auf einer Seite der Maschine gleich ist, so dass sich Einlaufprobleme zwischen gegensinnig drehenden Einzugs- und Mäheinrichtungen erübrigen. Außerdem findet eine hohe Anzahl gleicher Teile Verwendung.

Wegen der gewählten Drehrichtung der ersten Einzugs- und Mäheinrichtung, die einen Transport des Ernteguts durch den rückwärtigen Bereich der ersten Einzugs- und Mäheinrichtung, wie er beispielsweise in der EP 0 508 189 A und der EP 0 760 200 A offenbart wird, erschwert, ist ein separates Querförderelement zweckmäßig, um das Erntegut von der zweiten Einzugs- und Mäheinrichtung nach innen zur Mitte der Maschine zu fördern, wo es dann durch die Umlenkfördereinheit in den Einzugskanal einer die Maschine tragenden Erntemaschine gefördert wird. Das Querförderelement arbeitet somit unabhängig von der ersten Einzugs- und Mäheinrichtung und fördert das Erntegut von der zweiten Einzugs- und Mäheinrichtung unabhängig davon durch einen Querförderkanal, der sich in Fahrtrichtung hinter der ersten Einzugs- und Mäheinrichtung befindet, zur Umlenkfördereinheit. Anstelle des separaten Querförderelements könnte man das Erntegut jedoch auch der ersten Einzugs- und Mäheinrichtung aufgeben und an ihrer Vorderseite mit umlaufen lassen. Anzumerken ist weiterhin, dass das im Folgenden beschriebene Querförderelement auch an Maschinen benutzt werden kann, bei denen die Einzugs- und Mäheinrichtungen die Drehrichtungen haben, die in der DE 102 22 310 A aufgezeigt werden.

In einer zweckmäßigen Ausführungsform ist das Querförderelement vor dem Querförderkanal angeordnet. Die aktive Förderung des von der zweiten Einzugs- und Mäheinrichtung einlaufenden Ernteguts erfolgt somit durch Elemente, die sich bezüglich der Fahrtrichtung der Maschine an der Vorderseite des Querförderkanals befinden. Auf diese Weise erreicht man einen kompakten Aufbau der Maschine.

Das Querförderelement könnte ein Schneckenförderer, ein Förderband oder ein mit geeigneten Mitnehmern versehener Kettenförderer sein. Aufgrund des Vorteils eines einfachen und verschleißarmen Aufbaus ist jedoch ein Rotationsförderer mit beliebiger, geeigneter Drehachse bevorzugt. In einer Ausführungsform könnte das Querförderelement eine von oben oder unten in den Querförderkanal eingreifende Förderscheibe mit horizontaler und quer zur Fahrtrichtung orientierter Drehachse sein. Ein Vorteil einer Förderscheibe gegenüber einem Schneckenförderer liegt in der definierten Zuförderung des Ernteguts an die nachfolgenden Förderer. Die Drehachse erstreckt sich in einer anderen Ausführungsform parallel zur Drehachse der ersten Einzugs- und Mäheinrichtung. Um einen kompakten Aufbau zu erreichen, kann die Drehachse des Querförderelements innerhalb des Hüllkreises der ersten Einzugs- und Mäheinrichtung angeordnet werden.

An der Rückseite des Querförderkanals könnte ebenfalls ein aktives Querförderelement angebracht werden, um die Gutförderung zu verbessern. Um die Maschine kompakt gestalten zu können, bietet es sich jedoch an, die Rückseite des Querförderkanals durch eine starr oder federnd angebrachte, jedoch nicht angetriebene Rückwand zu bilden. Die Rückwand erlaubt im Zusammenwirken mit dem Querförderelement eine einfache und sichere Förderung des Ernteguts durch den Querförderkanal.

Die Aufgabe des Querförderelements besteht darin, das Erntegut von der zweiten Einzugs- und Mäheinrichtung an der Rückseite der ersten Einzugs- und Mäheinrichtung entlang zu fördern, d. h. etwa die Breite der ersten Einzugs- und Mäheinrichtung zu überbrücken. Es ist daher zweckmäßig, dem Querförderelement einen Radius zu verleihen, der etwa mit dem Radius der ersten Einzugs- und Mäheinrichtung übereinstimmt. Denkbar wäre jedoch auch die Verwendung mehrerer kleinerer Querförderelemente.

In einer bevorzugten Ausführungsform setzt sich das Querförderelement aus einer oder mehreren koaxial übereinander angeordneten Förderscheiben zusammen, die in an sich bekannter Weise mit Aussparungen zur Aufnahme von Pflanzenstängeln versehen sind. Die Förderscheibe(n) oder beliebige andere Förderelemente des Querförderelements befindet oder befinden sich zwischen koaxial übereinander angeordneten Förderscheiben der Einzugs- und Mäheinrichtung, die ebenfalls in an sich bekannter Weise mit Aussparungen zur Aufnahme von Pflanzenstängeln versehen sind. Die Drehachse der Förderscheiben des Querförderelements ist gegenüber der Drehachse der Förderscheiben der Einzugs- und Mäheinrichtung versetzt, in der Regel in der Fahrtrichtung der Maschine nach hinten. Die Förderscheiben können durch geeignete Getriebegehäuse gehalten werden, die auch die zugehörigen Antriebselemente enthalten. Die Verbindung der Getriebegehäuse unter- und oberhalb des Querförderelements kann durch ein Verbindungselement erfolgen, das sich innerhalb einer hohlen Welle befindet, die zum Antrieb des Querförderelements dient.

In der Regel ist die erste Einzugs- und Mäheinrichtung unmittelbar neben der Längsmittelebene der Maschine angeordnet. Dadurch ziehen zwei beidseits der Längsmittelebene angeordnete erste Einzugs- und Mäheinrichtungen das Erntegut zwischen sich ein, so dass sich hier kaum Gutförderprobleme ergeben können. Es wäre aber auch denkbar, zwischen der ersten Einzugs- und Mäheinrichtung und der Längsmittelebene der Maschine eine weitere Einzugs- und Mäheinrichtung mit beliebiger Drehrichtung anzuordnen. Die erste Einzugs- und Mäheinrichtung kann bei bestimmten Ausführungsformen gegenüber der Längsmittelebene der Maschine beliebig weit seitlich versetzt sein, insbesondere wenn die Maschine unsymmetrisch aufgebaut ist und/oder eine ungerade Anzahl an Einzugs- und Mäheinrichtungen aufweist.

Zur Vergrößerung der Arbeitsbreite können dritte Einzugs- und Mäheinrichtungen seitlich der zweiten Einzugs- und Mäheinrichtungen vorgesehen sein, die noch weiter von der Längsmittelebene der Maschine beabstandet sind. Denkbar ist auch eine Verwendung vierter, fünfter etc. Einzugs- und Mäheinrichtungen. Wegen der gewählten Drehrichtung der zweiten Einzugs- und Mäheinrichtung ist an der Rückseite der zweiten Einzugs- und Mäheinrichtung eine separate Förderung des Ernteguts zweckmäßig. Dazu kann ein Querförderelement Verwendung finden, das mit dem Querförderelement an der Rückseite der ersten Einzugs- und Mäheinrichtung gleichartig ist. Im Zwickelbereich zwischen benachbarten Querförderelementen kann eine Querfördertrommel angeordnet sein, wie sie in der EP 0 760 200 A beschrieben wird.

Die am weitesten außen angeordneten (dritten) Einzugs- und Mäheinrichtungen drehen sich vorzugsweise derart, dass sie das Gut zunächst nach innen und dann nach hinten fördern, was den Vorteil hat, dass sich eine Förderung des Ernteguts entlang ihrer Rückseiten erübrigt, die Gutaufnahme im Bereich zwischen den dritten und zweiten Einzugs- und Mäheinrichtungen verbessert und der Aufbau der Maschine vereinfacht ist. Sie könnten sich aber auch gegensinnig zu den ersten und zweiten Einzugs- und Mäheinrichtungen drehen. Finden vier oder mehr Einzugs- und Mäheinrichtungen Verwendung, entspricht der Aufbau der dritten Einzugs- und Mäheinrichtungen dem der zweiten Einzugs- und Mäheinrichtungen.

Die Umlenkfördereinheit dient in der Regel auch zum Transport des Guts von der ersten Einzugs- und Mäheinrichtung. Sie übernimmt das Gut vorzugsweise stromab des Übernahmebereichs des Guts von der zweiten Einzugs- und Mäheinrichtung (in der Regel vom Querförderelement), sodass die beiden Übergabebereiche an die Umlenkfördereinheit voneinander unabhängig sind.

Die Maschine ist vorzugsweise symmetrisch aufgebaut, d. h. es sind beidseits der Längsmittelebene zwei erste und zwei zweite und optional beliebig viele weitere (zweite und/oder dritte) Einzugs- und Mäheinrichtungen vorhanden.

In den Zeichnungen sind sechs nachfolgend näher beschriebene Ausführungsbeispiele der Erfindung dargestellt. Es zeigt:
- Fig. 1: eine Draufsicht auf eine erfindungsgemäße Maschine zum Mähen von stängelartigem Erntegut,
- Fig. 2: eine Maschine mit gegenüber der in Figur 1 gezeigten Ausführungsform vergrößerter Arbeitsbreite,
- Fig. 3: eine Maschine mit gegenüber der in Figur 2 gezeigten Ausführungsform vergrößerter Arbeitsbreite,
- Fig. 4: einen Querschnitt durch die in Figur 1 dargestellte Maschine entlang der Linie 4-4,
- Fig. 5: eine Abwandlung der Maschine aus Figur 2,
- Fig. 6: eine Abwandlung der Maschine aus Figur 3, und
- Fig. 7: eine Maschine mit nochmals vergrößerter Arbeitsbreite.

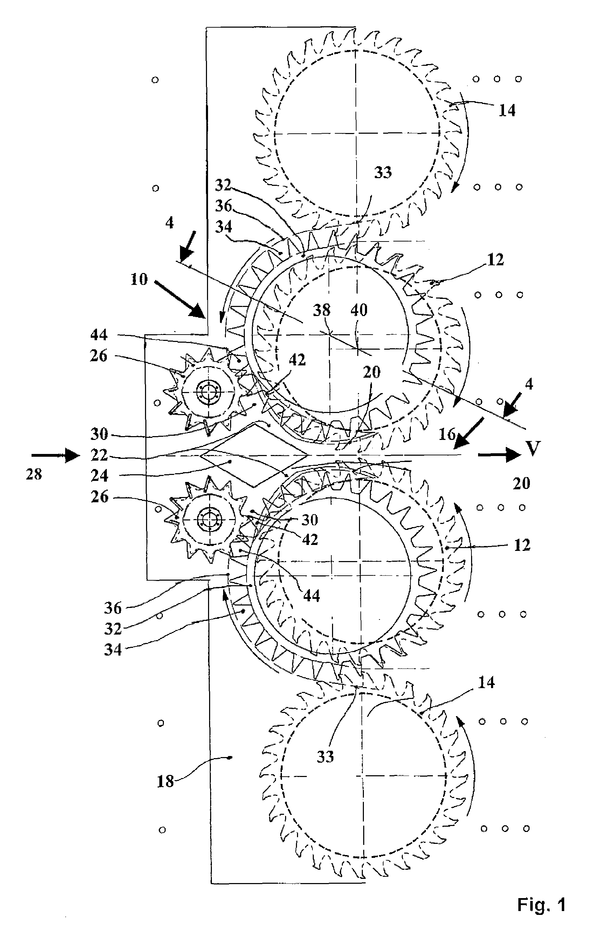

Die in Figur 1 dargestellte Maschine 10 zum Mähen von stängelartigem Erntegut weist vier Einzugs- und Mäheinrichtungen 12, 14 auf, die symmetrisch zu einer Längsmittelebene 16 der Maschine 10 angeordnet sind. Auf beiden Seiten der Längsmittelebene 14 sind je zwei Einzugs- und Mäheinrichtungen 12, 14 vorhanden. Die Maschine 10 wird von einem Rahmen 18 getragen. Im Folgenden beziehen sich Richtungsangaben, wie vorn, hinten, außen, innen und seitlich auf die Fahrtrichtung V der Maschine 10.

Die reihenunabhängig arbeitenden Einzugs- und Mäheinrichtungen 12, 14 sind jeweils aus einer unteren Schneidscheibe, die um eine etwa vertikal verlaufende Achse rotiert, und koaxial darüber angeordneten Förderscheiben zusammengesetzt, deren Umfang mit taschenförmigen Aussparungen ausgestattet ist. Die Schneidscheiben trennen die oberen Teile des Ernteguts, bei dem es sich insbesondere um Mais handelt, von den im Boden verbleibenden Stoppeln ab. Die Stängel des Ernteguts werden in den taschenförmigen Aussparungen der Förderscheiben aufgenommen und festgehalten. Anstelle aller oder einiger der dargestellten rotierenden Einzugs- und Mäheinrichtungen können auch Einzugsund Mäheinrichtungen verwendet werden, die auf endlosen Förderern basieren. Den Einzugs- und Mäheinrichtungen 12, 14 sind in der Regel Halmteiler vorgeordnet (nicht dargestellt). Im Betrieb wird die Maschine 10 am Einzugskanal eines selbstfahrenden Feldhäckslers befestigt, der sie in Fahrtrichtung V über ein abzuerntendes Feld bewegt.

Die der Längsmittelebene 16 benachbarten, inneren Einzugs- und Mäheinrichtungen 12 werden im Folgenden als erste Einzugs- und Mäheinrichtungen bezeichnet, während die äußeren Einzugs- und Mäheinrichtungen 14 als zweite Einzugs- und Mäheinrichtungen bezeichnet werden.

Die im Erntebetrieb der Maschine 10 verwendeten Drehrichtungen der Einzugs- und Mäheinrichtungen 12, 14 werden durch Pfeile angedeutet. Die ersten Einzugs- und Mäheinrichtungen 12 drehen sich derart, dass das abgemähte Erntegut zunächst nach innen, in Richtung auf die Längsmittelebene 16 zu gefördert wird, und dann entgegen der Fahrtrichtung V nach hinten. Zwischen den ersten Einzugs- und Mäheinrichtungen 12 einlaufendes Gut kann somit ohne Schwierigkeiten geerntet werden.

In dem der Längsmittelebene 16 benachbarten Bereich der ersten Einzugs- und Mäheinrichtungen 12 sind mit dem Rahmen 18 verbundene erste Ausräumer 20 angeordnet, die die Erntegutstängel aus den taschenförmigen Aussparungen der Förderscheiben der Einzugs- und Mäheinrichtungen 12 radial herausnehmen. Anschließend gelangen die Pflanzen durch einen sich schräg nach außen und hinten erstreckenden Förderkanal 22, der seitlich durch die Ausräumer 20 und ein rautenförmiges Führungselement 24 begrenzt wird, und insbesondere durch den Druck nachfolgender Pflanzen, die durch die erste Einzugs- und Mäheinrichtung 12 gefördert werden, in den Wirkungsbereich eines Umlenkförderers 26 in Form einer Schrägfördertrommel, die aus einem zylindrischen Körper mit übereinander angeordneten, gezahnten Förderscheiben aufgebaut ist. Es wäre auch denkbar, auf das Führungselement 24 zu verzichten. Die Umlenkförderer 26 weisen nach vorn geneigte Drehachsen auf und fördern das an einem mit dem Bezugszeichen 30 gekennzeichneten Punkt von den ersten Einzugs- und Mäheinrichtungen 12 einlaufende Erntegut zunächst nach innen und dann schräg nach hinten und oben in den Einzugskanal 28 des Feldhäckslers mit darin übereinander angeordneten Einzugswalzen.

Die zweiten Einzugs- und Mäheinrichtungen 14 drehen sich gleichsinnig mit den ersten Einzugs- und Mäheinrichtungen 12. Kurz vor dem der Längsmittelebene 16 zugewandten Bereich der zweiten Einzugs- und Mäheinrichtungen 14 sind zweite Ausräumer 33 mit dem Rahmen 18 verbunden, um das Erntegut aus den zweiten Einzugs- und Mäheinrichtungen 14 herauszufördern. Es wird dort von Querförderelementen 32 übernommen, die aus jeweils zwei übereinander angeordneten Förderscheiben mit um ihrem Umfang verteilten taschenförmigen Aussparungen aufgebaut sind. Die Querförderelemente 32 sind bezüglich der Fahrtrichtung V vor Querförderkanälen 34 angeordnet, die sich an der Rückseite der Maschine 10 zwischen den zweiten Ausräumern 33 und den Umlenkförderern 26 erstrecken. Nach hinten werden die Querförderkanäle 34 durch maschinenfeste Gehäusewände 36 begrenzt, deren Formen an die Querförderelemente 32 angepasst sind, d. h. einen über die Länge des Querförderkanals 34 konstanten Abstand davon aufweisen, und die in ihren äußeren Endbereichen in die zweiten Ausräumer 33 übergehen.

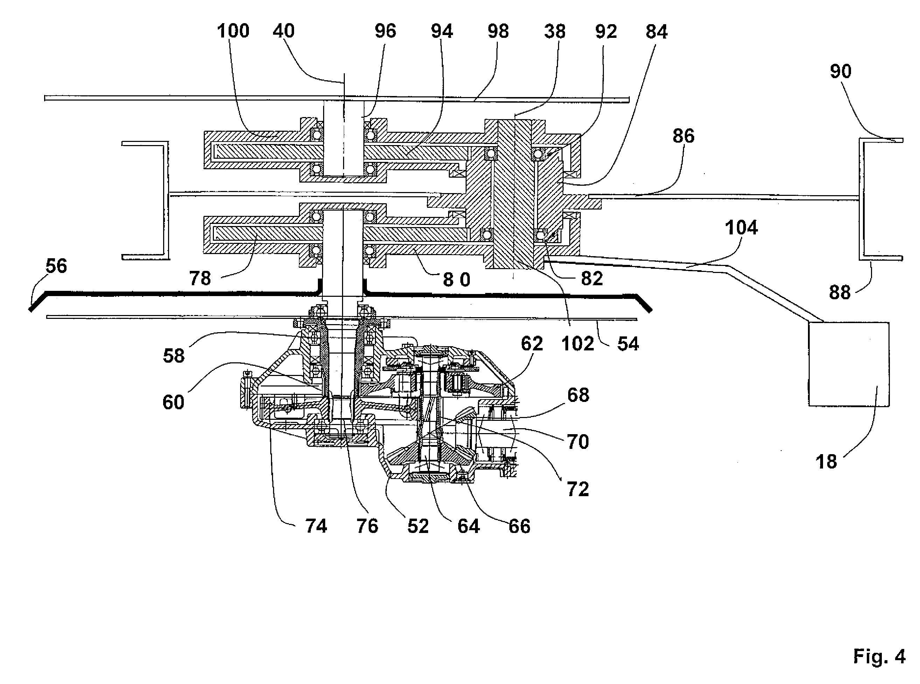

Der Drehpunkt 38 der rotativ angetriebenen Querförderelemente 32 liegt innerhalb des Hüllkreises der ersten Einzugs- und Mäheinrichtungen 14, und zwar hinter dem Drehpunkt 40 der ersten Einzugs- und Mäheinrichtung 12 und diesem gegenüber nach außen versetzt. Die Förderscheiben der Querförderelemente 32 liegen in vertikaler Richtung zwischen den Förderscheiben der ersten Einzugs- und Mäheinrichtungen 12, wie anhand der Figur 4 erkennbar ist.

Die von den zweiten Einzugs- und Mäheinrichtungen 14 geernteten Pflanzen werden somit durch die Querförderelemente 32 durch den Querförderkanal 34 gefördert. Am Ende des Querförderkanals 34 fördern dritte Ausräumer 42, die in die ersten Ausräumer 20 übergehen bzw. mit diesen einteilig sind, das Erntegut aus den Querförderelementen 32 heraus. An einem mit dem Bezugszeichen 44 gekennzeichneten Punkt, der stromauf des Punkts 30 liegt, übernimmt die Umlenkfördereinheit 26 die Pflanzen aus dem Querförderkanal 34.

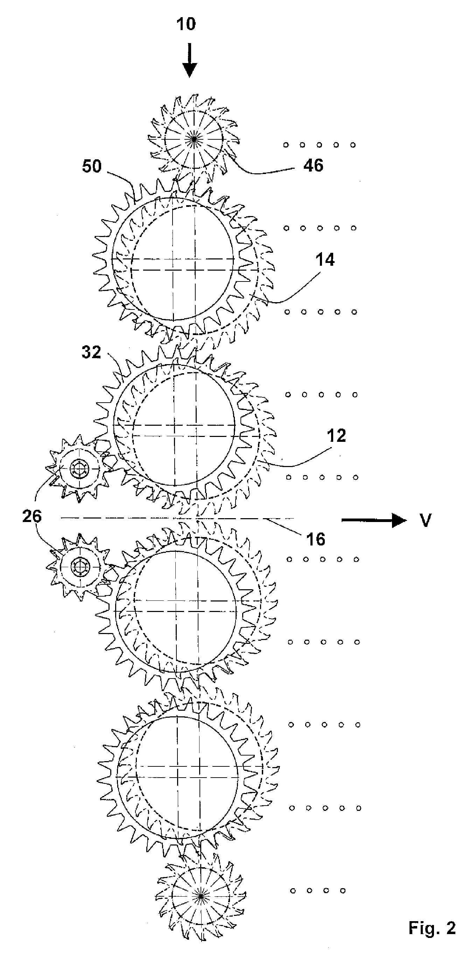

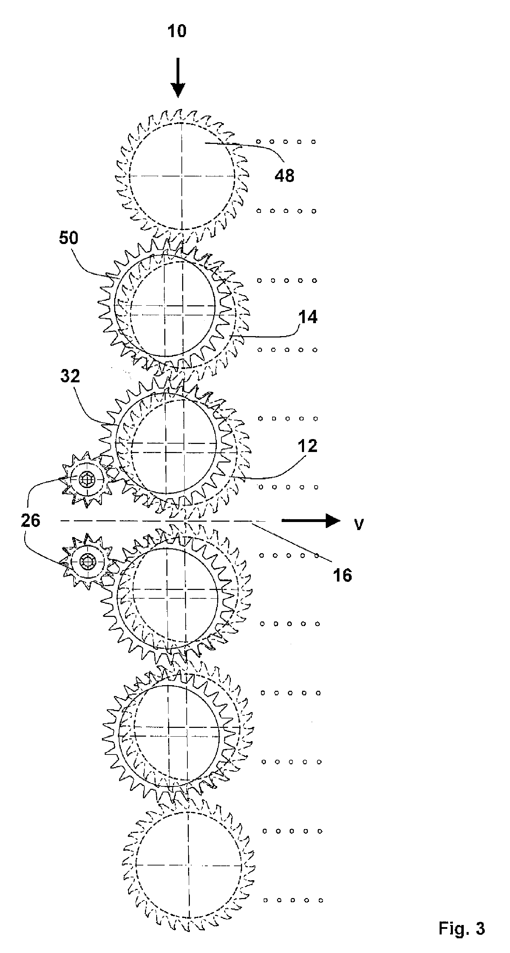

Die dargestellte Ausführungsform kann durch Hinzufügen von Einzugs- und Mäheinrichtungen 14 und Querförderelementen 32 in Ausführungsformen mit größerer Arbeitsbreite abgewandelt werden, wie in den Figuren 3 und 4 dargestellt ist. Dort sind seitlich von den zweiten Einzugs- und Mäheinrichtungen 14 dritte Einzugsund Mäheinrichtungen 46 bzw. 48 angeordnet. Die dritten Einzugsund Mäheinrichtungen 48 der Figur 3 weisen größere Durchmesser auf als die dritten Einzugs- und Mäheinrichtungen 46 der Figur 2, so dass sie die Ernte einer weiteren Reihe von Pflanzen ermöglichen, sind ansonsten aber gleichen Aufbaus und gleicher Arbeitsweise.

Die in den Figuren 2 und 3 dargestellten zweiten Einzugs- und Mäheinrichtungen 14 arbeiten analog zu der in Figur 1 dargestellten Ausführungsform und geben das von ihnen abgemähte Erntegut den Querförderelementen 32 auf, die in Fahrtrichtung V hinter den ersten Einzugs- und Mäheinrichtungen 12 angeordnet sind. Wegen der gewählten Drehrichtung der zweiten Einzugs- und Mäheinrichtungen 14 ist diesen ebenfalls jeweils ein Querförderelement 50 zugeordnet, dessen Positionierung, Aufbau und Funktion dem Querförderelement 32 entspricht. Das Querförderelement 50 setzt sich ebenfalls aus übereinander angeordneten Förderscheiben zusammen, um dessen Umfang taschenförmige Aussparungen zur Aufnahme von Pflanzenstängeln verteilt sind. Die Förderscheiben der Querförderelemente 50 sind zwischen den Förderscheiben der zweiten Einzugs- und Mäheinrichtung 14 angeordnet und an ihrer Rückseite ist ebenfalls ein Querförderkanal definiert. Die Querförderelemente 50 übernehmen somit das von den dritten Einzugs- und Mäheinrichtungen 46 bzw. 48 abgemähte Erntegut, das durch Ausräumer daraus herausgehoben wird, und fördern es in Richtung auf die Längsmittelebene 16 der Maschine 10. Kurz vor dem Erreichen des der Längsmittelebene 16 nächsten Punkts der Querförderelemente 50 werden die Stängel des Erntegutes durch weitere Ausräumer (nicht gezeigt) aus den taschenförmigen Aussparungen der Förderscheiben der Querförderelemente 50 herausgehoben und gelangen danach in den Wirkungsbereich der nächstinneren Querförderelemente 32.

In die Ausführungsformen nach Figur 2 und 3 könnten zwischen der ersten und zweiten Einzugs- und Mäheinrichtung 12, 14 noch weitere zweite Einzugs- und Mäheinrichtungen 14 mit dahinter angeordneten Querförderelementen 50 eingefügt werden, um die Arbeitsbreiten noch weiter zu vergrößern bzw. kleinere Durchmesser der Einzugs- und Mäheinrichtungen 12, 14, 46, 48 verwenden zu können.

Die Figur 4 zeigt zur Verdeutlichung des Aufbaus des Antriebs der ersten Einzugs- und Mäheinrichtungen 12 und der Querförderelemente 32 einen vertikalen Schnitt durch die Maschine 10 entlang der Linie 4-4. Die zweiten Einzugs- und Mäheinrichtungen 14 und Querförderelemente 50 aus Figur 2 und 3 sind damit jeweils baugleich.

An einem unteren Getriebegehäuse 52, das mit dem Rahmen 18 starr verbunden ist, ist die oben erwähnte Schneidscheibe 54 drehbar gelagert. Koaxial zur Schneidscheibe 54 und vertikal darüber angeordnet ist eine erste Förderscheibe 56 der Einzugs- und Mäheinrichtung 12 angeordnet. Die Schneidscheibe 54 wird im Betrieb durch eine Hohlwelle 58 angetrieben, die an ihrem unteren Ende mit einer Verzahnung 60 versehen ist, die mit eine Zahnrad 62 kämmt. Das Zahnrad 62 ist auf einer Welle 64 angeordnet, die über ein Kegelzahnradgetriebe mit zwei Kegelzahnrädern 66, 68 angetrieben wird. Das Kegelzahnrad 68 wird durch eine Welle 70 angetrieben, die von einer Hauptantriebswelle (nicht gezeigt) her angetrieben wird, welche mit dem Verbrennungsmotor einer selbstfahrenden Erntemaschine in Antriebsverbindung steht, die die Maschine 10 über ein abzuerntendes Feld bewegt.

Die im unteren Getriebegehäuse 52 drehbar gelagerte Welle 64 steht über eine Verzahnung 72 und ein Zahnrad 74 mit einer Welle 76 in Antriebsverbindung, die sich innerhalb der Hohlwelle 58 nach oben und durch die Schneidscheibe hindurch erstreckt. Die Welle 76 trägt die erste Förderscheibe 56 und versetzt diese um die Drehachse 40 in Drehung.

Die Welle 76 treibt auch ein erstes Zahnrad 78 an, das sich in einem mittleren Getriebegehäuse 80 befindet, welches oberhalb der ersten Förderscheibe 56 angebracht ist. Das erste Zahnrad 78 kämmt mit einem zweiten Zahnrad 82, das drehfest auf einer hohlen Welle 84 angeordnet ist, welche sich im mittleren Getriebegehäuse 80 befindet, um die Drehachse 38 dreht und eine Verbindungsscheibe 86 antreibt, an deren äußerem Umfang sich eine untere Förderscheibe 88 und eine obere Förderscheibe 90 befinden. Außerdem treibt die Welle 84 an ihrem oberen Ende ein drittes Zahnrad 92, das mit einem vierten Zahnrad 94 kämmt. Das vierte Zahnrad 94 treibt über eine zweite Welle 96 die zweite (obere) Förderscheibe 98 der Einzugs- und Mäheinrichtung 12. Das dritte und vierte Zahnrad 92, 94 befinden sich in einem oberen Getriebegehäuse 100, das wiederum mit dem mittleren Getriebegehäuse 80 verbunden ist. Die Welle 84 ist eine Hohlwelle; sie ist mit einer mittigen, axial verlaufenden Bohrung versehen. Durch die Bohrung erstreckt sich ein Verbindungselement 102, welches das mittlere Getriebegehäuse 80 und das obere Getriebegehäuse 100 drehfest aneinander haltert. Das mittlere Getriebegehäuse 80 stützt sich weiterhin über eine Drehmomentstütze 104, die sich zwischen der Schneidscheibe 54 und der Verbindungsscheibe 86 radial nach außen und hinten erstreckt, am Rahmen 18 ab.

Die Schneidscheibe 54 und die untere Förderscheibe 56 sowie die obere Förderscheibe 98 der ersten Einzugs- und Mäheinrichtung 12 sind koaxial zueinander und zur Drehachse 40 angeordnet. Die Drehachsen der Förderscheiben 88, 90 des Querförderelements 32 fallen mit der Drehachse 38 zusammen.

Die Übersetzung der Zahnräder 78, 82, 92 und 94 ist derart gewählt, dass die Förderscheiben 56, 98 der ersten Einzugsund Mäheinrichtung 12 untereinander gleich schnell, aber schneller drehen als die Förderscheiben 88, 90 des Querförderelements 32. Es wäre aber auch denkbar, dass die Fördergeschwindigkeit (d. h. die Umfangsgeschwindigkeit der taschenförmigen Aussparungen der Förderscheiben 88, 90) des Querförderelements 32 größer als die der Einzugs- und Mäheinrichtung 12 oder damit etwa gleich ist.

In einer anderen Ausführungsform könnte die Schneidscheibe 54 drehbar am unteren Gehäuse 52 gelagert sein und durch ein Zahnrad an ihrer Unterseite (oder eine Hohlwelle) angetrieben werden. Durch die Schneidscheibe 54 und das Zahnrad bzw. die Hohlwelle könnte sich eine weitere Hohlwelle erstrecken, die zum Antrieb der Förderscheibe 56 und des Zahnrads 78 dient. Im Innenraum der weiteren Hohlwelle könnte ein weiteres Verbindungselement angeordnet sein, das das mittlere Getriebegehäuse 80 trägt, so dass die Drehmomentstütze 104 entlastet ist oder entfallen kann.

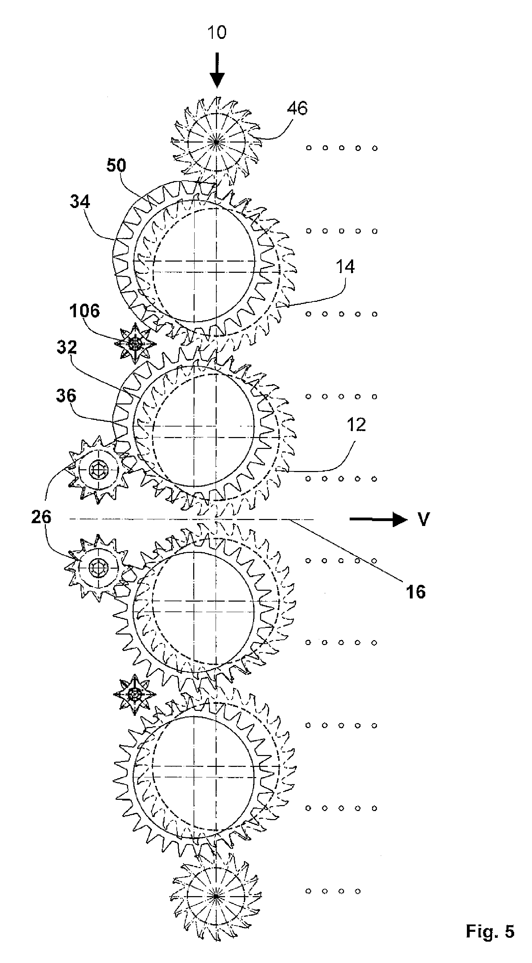

In den Figuren 5 bis 7 sind weitere Ausführungsformen der Erfindung dargestellt, wobei mit den zuvor beschriebenen Maschinen übereinstimmende Elemente mit denselben Bezugszeichen versehen sind.

Die Maschine in Figur 5 entspricht im Wesentlichen der in Figur 2 dargestellten Ausführungsform. Ein Unterschied besteht allerdings in der Hinzufügung jeweils einer Querfördertrommel im Zwickelbereich zwischen dem Querförderelement 50 der zweiten Einzugs- und Mäheinrichtung 14 und dem Querförderelement 32 der ersten Einzugs- und Mäheinrichtung 12. Die Querfördertrommeln 106 entsprechen in ihrem Aufbau und ihrer Funktion den Querfördertrommeln aus der EP 0 760 200 A. Sie sind aus einem Rotationskörper mit etwa vertikaler Drehachse aufgebaut, der mit übereinander angeordneten Förderscheiben mit Förderzinken versehen ist. Die Querfördertrommeln 106 sind hinter dem Querförderkanal 34 angeordnet. Die Förderzinken ihrer Förderscheiben erstrecken sich durch geeignete Schlitze in der Rückwand 36, die den Querförderkanal 34 nach hinten begrenzt. Durch geeignete Räumelemente (nicht eingezeichnet), wie Kufen oder Stäbe, wird das Erntegut aus den Querförderelementen 50 herausgehoben und von den Förderzinken der Querfördertrommeln 106 übernommen, die es in Richtung auf die Längsmittelebene 16 zu fördern. Unmittelbar stromab von diesem Übergabepunkt übernehmen die Förderzinken der Querfördertrommeln 106 auch das Erntegut von den zweiten Einzugs- und Mäheinrichtungen 14. Anschließend übernimmt das Querförderelement 32 der ersten Einzugs- und Mäheinrichtung 12 das Erntegut von der Querfördertrommel 106.

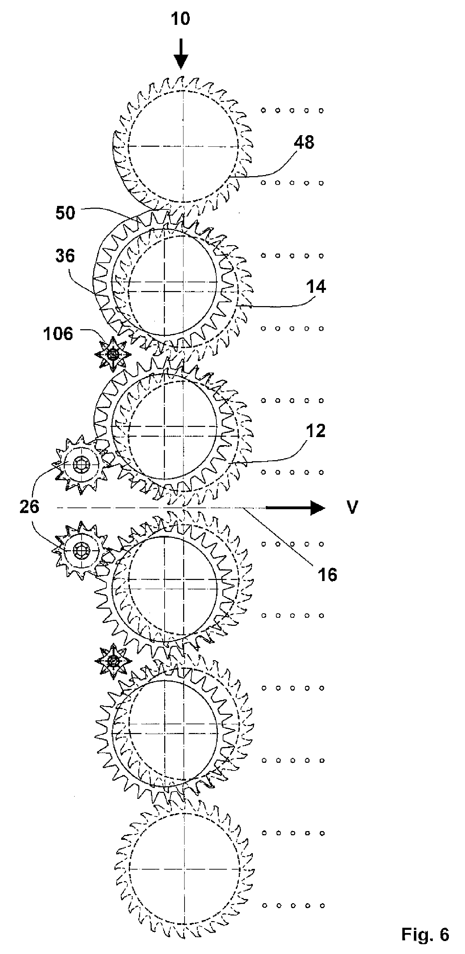

Mit Ausnahme der Hinzufügung der zuvor beschriebenen Querfördertrommel 106 stimmt die in Figur 6 gezeigte Ausführungsform mit der aus Figur 3 überein.

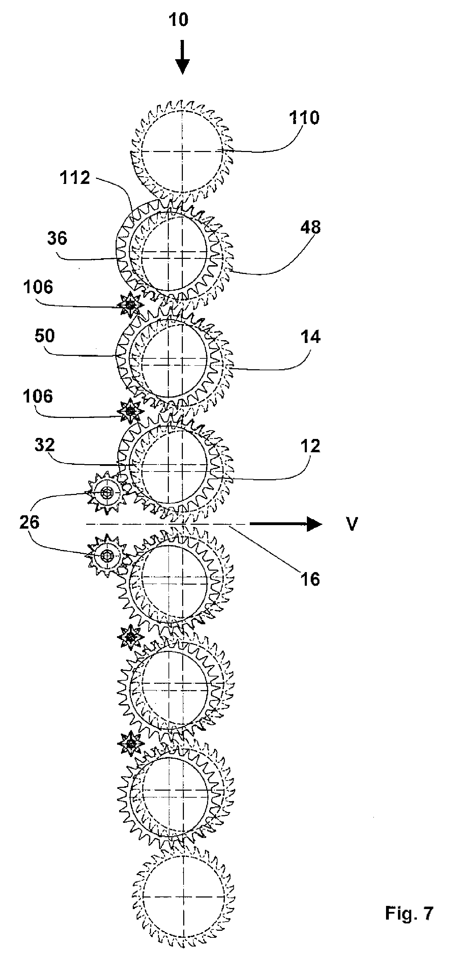

Die in der Figur 7 dargestellte Maschine 10 umfasst zusätzlich vierte Einzugs- und Mäheinrichtungen 110. Daher ist den dritten Einzugs- und Mäheinrichtungen ein Querförderelement 112 zugeordnet. In ihrem Aufbau entsprechen in dieser Ausführungsform die dritten Einzugs- und Mäheinrichtungen 48 mit dem Querförderelement 112 den zweiten Einzugs- und Mäheinrichtungen 14 mit dem Querförderelement 50. Im Zwickelbereich zwischen dem Querförderelement 112 der dritten Einzugs- und Mäheinrichtung 48 und dem Querförderelement 50 der zweiten Einzugs- und Mäheinrichtung ist ebenfalls eine Querfördertrommel 106 angeordnet, wie sie bezüglich der Figur 5 beschrieben wurde. Eine weitere Querfördertrommel 106 befindet sich im Zwickelbereich zwischen den Querförderelementen 50 und 32. Die Drehrichtungen der Einzugsund Mäheinrichtungen 12, 14, 48 und 110 der Figur 7 verlaufen derart, dass im normalen Erntebetrieb das Erntegut abgeschnitten und zunächst in Richtung auf die Längsmittelebene 16 der Maschine 10 gefördert wird. Dadurch erübrigen sich Förderprobleme zwischen gegensinnig drehenden Einzugs- und Mäheinrichtungen.

Beim Reversieren drehen sich die angetriebenen Elemente der Maschine 10 jeweils gegensinnig zu den beschriebenen Drehrichtungen.

## Patentansprüche

1. Maschine (10) zum Mähen von stängelartigem Erntegut, mit mehreren seitlich nebeneinander angeordneten Einzugs- und Mäheinrichtungen (12, 14) zum Abschneiden und Fördern des Ernteguts, von denen auf einer Seite der Längsmittelebene der Maschine (10) eine erste Einzugs- und Mäheinrichtung (12) und eine zweite, seitlich neben ihr angeordnete und weiter als die erste Einzugs- und Mäheinrichtung (12) von der Längsmittelebene der Maschine (10) beabstandete Einzugs- und Mäheinrichtung (14) vorhanden sind, und mit einer Umlenkfördereinheit (26), die eine leicht nach vorn geneigte Drehachse aufweist, um den vertikalen Abstand zwischen der Arbeitsebene der Einzugs- und Mäheinrichtungen (12, 14) und der Ebene des Einzugskanals (28) einer Erntemaschine zu überbrücken und das Erntegut in den Einzugskanal (28) einer Erntemaschine einzuführen, wobei die erste Einzugs- und Mäheinrichtung (12) derart antreibbar ist, dass sie abgeschnittenes Erntegut zunächst nach innen und dann nach hinten fördert, **dadurch gekennzeichnet, dass** die zweite Einzugs- und Mäheinrichtung (14) gleichsinnig mit der ersten Einzugs- und Mäheinrichtung (12) antreibbar ist.

2. Maschine (10) nach Anspruch 1, **gekennzeichnet durch** ein in Bewegung versetzbares Querförderelement (32), das betreibbar ist, das von der zweiten Einzugs- und Mäheinrichtung (14) abgeschnittene Erntegut unabhängig von der ersten Einzugs- und Mäheinrichtung (12) **durch** einen Querförderkanal (34), der sich in Fahrtrichtung hinter der ersten Einzugs- und Mäheinrichtung (12) befindet, in Richtung auf die Mitte der Maschine (10) hin zu fördern und der Umlenkfördereinheit (26) zuzuführen.

3. Maschine (10) nach Anspruch 2, **dadurch gekennzeichnet, dass** das Querförderelement (32) vor dem Querförderkanal (34) angeordnet ist.

4. Maschine (10) nach Anspruch 2 oder 3, **dadurch gekennzeichnet, dass** das Querförderelement (32) drehbar angeordnet ist, und dass seine Drehachse (38) etwa parallel zur Drehachse (40) der ersten Einzugs- und Mäheinrichtung (12) verläuft.

5. Maschine nach Anspruch 4, **dadurch gekennzeichnet, dass** die Drehachse des Querförderelements (38) innerhalb des Hüllkreises der ersten Einzugs- und Mäheinrichtung (12) liegt.

6. Maschine (10) nach einem der Ansprüche 3 bis 5, **dadurch gekennzeichnet, dass** das Querförderelement (32) eingerichtet ist, das Erntegut im Zusammenwirken mit einer in Fahrtrichtung hinter dem Querförderelement (32) angeordneten Rückwand (36), welche die in Fahrtrichtung hintere Begrenzung des Querförderkanals (34) bildet, zu fördern.

7. Maschine (10) nach einem der Ansprüche 4 bis 6, **dadurch gekennzeichnet, dass** das Querförderelement (32) einen Radius aufweist, der etwa dem Radius der Einzugs- und Mäheinrichtung (12) entspricht.

8. Maschine (10) nach einem der Ansprüche 4 bis 7, **dadurch gekennzeichnet, dass** das Querförderelement (32) eine oder mehrere mit Aussparungen zur Aufnahme von Pflanzenstängeln versehene Förderscheibe(n) (88, 90) umfasst, die in vertikaler Richtung zwischen mit Aussparungen zur Aufnahme von Pflanzenstängeln versehenen Förderscheiben (56, 98) der ersten Einzugs- und Mäheinrichtung (12) angeordnet ist oder sind.

9. Maschine (10) nach einem der Ansprüche 2 bis 8, **dadurch gekennzeichnet, dass** das Querförderelement (32) durch eine hohle Welle (84) antreibbar ist, in deren Innenraum ein Verbindungselement (102) angebracht ist, das zwei Getriebegehäuse (80, 100) miteinander verbindet, wobei die Getriebegehäuse (80, 100) Mittel zum Antrieb der Welle (84) und einer Förderscheibe (98) der zugehörigen Einzugs- und Mäheinrichtung (12) enthalten.

10. Maschine (10) nach einem der Ansprüche 1 bis 9, **dadurch gekennzeichnet, dass** die erste Einzugs- und Mäheinrichtung (12) der Längsmittelebene (16) der Maschine (10) direkt benachbart ist.

11. Maschine (10) nach einem der Ansprüche 1 bis 10, **dadurch gekennzeichnet, dass** seitlich neben der zweiten Einzugsund Mäheinrichtung (14) noch eine dritte, weiter außen angeordnete Einzugs- und Mäheinrichtung (46, 48) vorhanden ist, die derart antreibbar ist, dass sie abgeschnittenes Erntegut zunächst nach außen oder innen und dann nach hinten fördert, und dass hinter der zweiten Einzugs- und Mäheinrichtung (14) ein weiteres Querförderelement (50) angeordnet ist, das betreibbar ist, das von der dritten Einzugs- und Mäheinrichtung (46, 48) abgeschnittene Erntegut unabhängig von der zweiten Einzugsund Mäheinrichtung (14) durch einen Querförderkanal, der sich in Fahrtrichtung hinter der zweiten Einzugs- und Mäheinrichtung (14) befindet, in Richtung auf die Mitte der Maschine (10) hin zu fördern.

12. Maschine nach Anspruch 11, **dadurch gekennzeichnet, dass** seitlich neben der dritten Einzugs- und Mäheinrichtung (46, 48) noch mindestens eine vierte, weiter außen angeordnete Einzugs- und Mäheinrichtung (110) vorhanden ist.

13. Maschine nach Anspruch 11 oder 12, **dadurch gekennzeichnet, dass** im Zwickelbereich zwischen benachbarten Querförderelementen (32, 50, 112) eine Querfördertrommel (106) angeordnet ist, die eine vertikale Drehachse aufweist und sich an der Rückseite des Querförderkanals (34) befindet.

14. Maschine (10) nach einem der Ansprüche 2 bis 13, **dadurch gekennzeichnet, dass** das Querförderelement (32) der Umlenkfördereinheit (26) das Erntegut an einem Punkt (44) zuführt, der stromauf eines Punktes (30) liegt, an dem die Umlenkfördereinheit (26) Erntegut von der ersten Einzugsund Mäheinrichtung (12) übernimmt.

15. Erntemaschine, insbesondere Feldhäcksler, mit einem Einzugskanal (28), an den eine Maschine (10) nach einem der vorhergehenden Ansprüche angeschlossen ist.
